# EUROPÄISCHE PATENTSCHRIFT

(11) **EP 3 126 097 B1**
(45) Veröffentlichungstag und Bekanntmachung des Hinweises auf die Patenterteilung: **30.12.2020**
(21) Anmeldenummer: 15717822.9
(22) Anmeldetag: 31.03.2015
(51) Int. Cl.: B25C 1/08

(54) **VERFAHREN UND SYSTEM ZUM STEUERN VON EINSPRITZVORGÄNGEN**
METHOD AND SYSTEM FOR CONTROLLING INJECTION PROCESSES
PROCÉDÉ ET SYSTÈME DE COMMANDE DE PROCÉDÉS D'INJECTION

(30) Priorität: 04.04.2014 EP 14163608
(43) Veröffentlichungstag der Anmeldung: 08.02.2017
(73) Patentinhaber: Hilti Aktiengesellschaft, 9494 Schaan (LI)
(72) Erfinder: STAUSS-REINER, Peter, A-6800 Feldkirch (AT); HEEB, Norbert, CH-9470 Buchs (CH); DITTRICH, Tilo, A-6800 Feldkirch (AT)
(74) Vertreter: Hilti Aktiengesellschaft Corporate Intellectual Property
(86) Internationale Anmeldenummer: PCT/EP2015/056987
(87) Internationale Veröffentlichungsnummer: WO 2015/150365

(56) Entgegenhaltungen:
- EP-A2- 2 397 267
- WO-A1-02/39011
- DE-A1-102008 000 974
- DE-B3- 10 319 647
- US-A1- 2004 215 407

## Beschreibung

### Technisches Gebiet

Die Erfindung betrifft ein Verfahren und ein System zum Steuern von Einspritzvorgängen in flüssigbrennstoffbetriebenen Setzgeräten, die einen Brennstoffbehälter umfassen, aus welchem Brennstoff über eine zeitgesteuerte Dosiereinrichtung einer Brennkammer zugeführt wird.

### Stand der Technik

Aus der europäischen Patentanmeldung EP 2 368 669 A2 ist ein Setzgerät bekannt, bei dem der Brennstoffbedarf in Abhängigkeit von einer Brennkammertemperatur bestimmt wird, wobei eine Dosierrate in Abhängigkeit von einer Brennstoffbehältertemperatur bestimmt wird. Aus der Dosierrate und dem Brennstoffbedarf wird mit einer Steuereinheit die Dosierzeit berechnet. Aus der amerikanischen Patentanmeldung US 2011/0180582 A1 ist ein Setzgerät mit einem Drucksensor bekannt, mit welchem der Druck in einem Brennstoffbehälter bestimmt wird. Der Brennstoffbehälterdruck wird verwendet, um auf den Brennstoffbehälterfüllstand zu schließen. Aus der deutschen Patentschrift DE 103 19 646 B3 ist ein Treibmittelbehälter für brennkraftbetriebene Setzgeräte mit einem Gehäuse und einem Gehäuseinnenraum zur Aufnahme von Treibmitteln bekannt, wobei an dem Treibmittelbehälter eine Datenspeicher-Identifikationseinheit angeordnet ist, in der Treibmittel- Füllstandsdaten abspeicherbar und auslesbar sind.

### Darstellung der Erfindung

Aufgabe der Erfindung ist es, die Steuerung von Einspritzvorgängen in flüssigbrennstoffbetriebenen Setzgeräten weiter zu verbessern.

Die Aufgabe ist bei einem Verfahren zum Steuern von Einspritzvorgängen in flüssigbrennstoffbetriebenen Setzgeräten, die einen Brennstoffbehälter umfassen, aus welchem Brennstoff über eine zeitgesteuerte Dosiereinrichtung einer Brennkammer zugeführt wird, dadurch gelöst, dass eine Dosierzeit der zeitgesteuerten Dosiereinrichtung entsprechend des Alters des Brennstoffbehälters angepasst wird. Der Brennstoffbehälter ist vorzugsweise doppelwandig ausgeführt. Bei einem so genannten Can-in-Can-System sind zwei Behälter ineinander angeordnet. Der innere Behälter dient zur Aufnahme des Brennstoffs und ermöglicht eine hohe Dichtheit. Bei einem ebenfalls bekannten Beutelsystem wird der innere Behälter durch einen Beutel ersetzt, was im Hinblick auf die Herstellkosten vorteilhaft ist. Allerdings kommt es bei Brennstoffbehältern nach dem Beutelsystem aufgrund von Diffusionsvorgängen durch die Beutelwand beziehungsweise im Bereich einer Schweißnaht des Beutels zu einem relativ großen Druckabfall während der Lagerung. Dadurch wird die Dosiermenge verändert, was zu Gerätestörungen im Betrieb des Setzgeräts mit dem Brennstoffbehälter führen kann.

Durch die Anpassung der Dosierzeit an das Alter des Brennstoffbehälters kann der insbesondere bei Brennstoffbehältern nach dem Beutelsystem auftretende Druckabfall auf einfache Art und Weise berücksichtigt werden. Mit dem Alter des Brennstoffbehälters ist im Sinne der Erfindung bevorzugt die Zeit seit dem Datum der Herstellung, besonders bevorzugt seit dem Datum des Abfüllens des Brennstoffbehälters zu verstehen. Die Dosiermenge hängt hauptsächlich von der Dosierzeit, dem Brennstoffbehälterdruck und der Brennstoffdichte, insbesondere der Brenngasdichte, ab. Der Massenstrom durch die Dosiereinrichtung hängt hauptsächlich vom Brennstoffbehälterdruck ab. Die Dosiermenge wird durch die zeitlich begrenzte Öffnung der Dosiereinrichtung bestimmt. Bei der Ermittlung der notwenigen Dosierzeit werden zum Beispiel die Umgebungstemperatur und der Umgebungsdruck berücksichtigt. Diese Informationen können über geeignete Sensoren ermittelt werden. Bei der Ermittlung der Dosierzeit wird in der Regel davon ausgegangen, dass der Brennstoffbehälter bei gleicher Temperatur einen konstanten Brennstoffbehälterdruck aufweist. Durch die erfindungsgemäße Berücksichtigung des Alters des Brennstoffbehälters bei der Ermittlung der Dosierzeit kann der, insbesondere bei Brennstoffbehältern nach dem Beutelsystem, auftretende Druckabfall des Brennstoffbehälterdrucks mit einbezogen werden. Dadurch kann die Setzqualität verbessert werden. Darüber hinaus können vorteilhaft auch länger gelagerte Brennstoffbehälter verwendet werden, ohne dass die Setzqualität beeinträchtigt wird.

Ein bevorzugtes Ausführungsbeispiel des Verfahrens ist dadurch gekennzeichnet, dass ein Abfülldatum oder Herstelldatum an oder auf dem Brennstoffbehälter in vorzugsweise elektronisch und/oder optisch erfassbarer beziehungsweise lesbarer Form gespeichert wird. Das Abfülldatum oder Herstelldatum kann zum Beispiel in einem so genannten RFID (Radio-Frequency-Identification) oder in einem Barcode gespeichert werden.

Ein weiteres bevorzugtes Ausführungsbeispiel des Verfahrens ist dadurch gekennzeichnet, dass das Abfülldatum oder Herstelldatum des Brennstoffbehälters in dem Setzgerät erfasst beziehungsweise gelesen wird. Das Abfülldatum oder Herstelldatum des Brennstoffbehälters wird zum Beispiel mit einem geeigneten Lesegerät beim Einsetzen des Brennstoffbehälters, bei der Inbetriebnahme des Setzgeräts und/oder vor einem Setzvorgang erfasst beziehungsweise gelesen.

Ein weiteres bevorzugtes Ausführungsbeispiel des Verfahrens ist dadurch gekennzeichnet, dass vor einem Dosiervorgang beziehungsweise Setzvorgang das Alter des Brennstoffbehälters bestimmt wird. Aus dem Alter des Brennstoffbehälters kann abgeschätzt werden wie groß ein Druckabbau oder Druckabfall im Inneren des Brennstoffbehälters zu einem aktuellen Zeitpunkt ist. Daraus kann relativ genau auf den tatsächlichen Druck in dem Brennstoffbehälter geschlossen werden.

Ein weiteres bevorzugtes Ausführungsbeispiel des Verfahrens ist dadurch gekennzeichnet, dass das Alter des Brennstoffbehälters aus dem Abfülldatum oder Herstelldatum des Brennstoffbehälters und einer Echtzeit ermittelt wird. Aus der Differenz zwischen der Echtzeit und dem Abfülldatum oder Herstelldatum ergibt sich auf einfache Art und Weise das Alter des Brennstoffbehälters.

Ein weiteres bevorzugtes Ausführungsbeispiel des Verfahrens ist dadurch gekennzeichnet, dass die Echtzeit mit einer Echtzeituhr in dem Setzgerät erfasst wird. Die Echtzeituhr kann zum Beispiel mit einem Steuergerät in dem Setzgerät kombiniert werden.

Ein weiteres bevorzugtes Ausführungsbeispiel des Verfahrens ist dadurch gekennzeichnet, dass das Abfülldatum oder Herstelldatum des Brennstoffbehälters mit einer Leseeinheit in dem Setzgerät gelesen wird. Das Abfülldatum oder Herstelldatum des Brennstoffbehälters kann einmalig, zum Beispiel beim Einsetzen des Brennstoffbehälters in das Setzgerät, gelesen werden. Das Abfülldatum oder Herstelldatum des Brennstoffbehälters kann aber auch bei jeder Inbetriebnahme des Setzgeräts gelesen werden. Alternativ kann das Abfülldatum oder Herstelldatum des Brennstoffbehälters auch vor jedem Setzvorgang gelesen werden. Dadurch wird die Genauigkeit beim Ermitteln des Alters des Brennstoffbehälters erhöht.

Ein weiteres bevorzugtes Ausführungsbeispiel des Verfahrens ist dadurch gekennzeichnet, dass mit dem Alter des Brennstoffbehälters ein durchschnittlicher Druckabfall in dem Brennstoffbehälter abgeschätzt wird. Der Verlauf des durchschnittlichen Druckabfalls in dem Brennstoffbehälter kann als konstant angenommen werden. Gegebenenfalls kann auch auf Kennlinien oder Kennfeldern zurückgegriffen werden, in welchen der durchschnittliche Druckabfall in dem Brennstoffbehälter durch Untersuchungen oder Versuche für einen speziellen Brennstoffbehältertyp ermittelt wurde.

Bei einem System zum Steuern von Einspritzvorgängen in flüssigbrennstoffbetriebenen Setzgeräten, die einen Brennstoffbehälter umfassen, aus welchem Brennstoff über eine zeitgesteuerte Dosiereinrichtung einer Brennkammer zugeführt wird, gemäß einem vorab beschriebenen Verfahren, ist die oben angegebene Aufgabe durch der folgenden Merkmale gelöst: An oder auf dem Brennstoffbehälter ist das Abfülldatum oder Herstelldatum des Brennstoffbehälter angegeben; das Setzgerät umfasst ein Echtzeituhr; das Setzgerät umfasst eine Leseeinheit; das Setzgerät umfasst eine Steuerung, die steuerungsmäßig mit der Echtzeituhr und der Leseeinheit verbunden ist. Das Setzgerät umfasst des Weiteren ein Computerprogrammprodukt mit einem Programmcode zum Durchführen des vorab beschriebenen Verfahrens, insbesondere, wenn das Programm in der Steuerung des Setzgeräts ausgeführt wird.

Die Erfindung betrifft des Weiteren ein Computerprogrammprodukt mit einem Programmcode zum Durchführen des vorab beschriebenen Verfahrens, insbesondere, wenn das Programm in der Steuerung des Setzgeräts ausgeführt wird.

Die Erfindung betrifft gegebenenfalls auch ein Setzgerät für ein vorab beschriebenes System.

Bei dem Setzgerät handelt es sich um ein Setzgerät zum Setzen von Befestigungselementen, wie Bolzen. Daher wird ein derartiges Setzgerät auch als Bolzensetzgerät bezeichnet. Das Setzgerät ist vorzugsweise als handgeführtes Setzgerät ausgeführt. Das Setzgerät wird mit Gas als Brennstoff betrieben. Bei dem Brennstoffbehälter handelt es sich vorzugsweise um eine Gasdose oder Gaskartusche, die in das Setzgerät eingesetzt wird.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

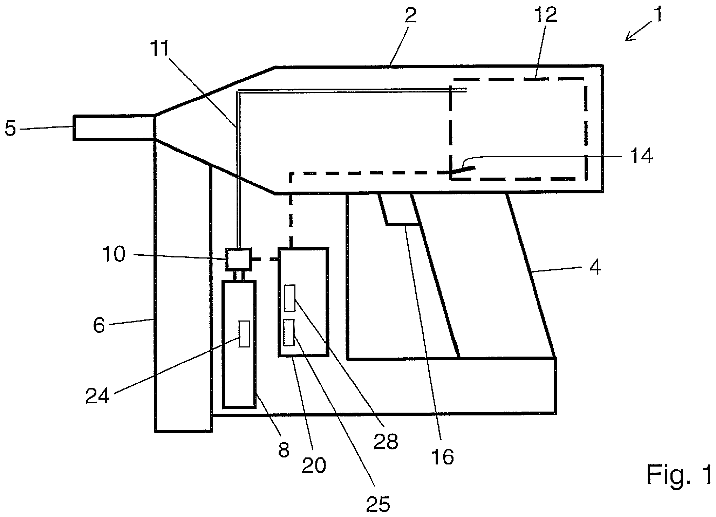

Figur 1 zeigt eine vereinfachte Darstellung eines Setzgeräts.

### Ausführungsbeispiele

In Figur 1 ist ein Setzgerät 1 mit einem Gehäuse 2 stark vereinfacht dargestellt. Das Gehäuse 2 umfasst einen Handgriff 4, an dem das Setzgerät 1 zum Eintreiben eines Befestigungselements anpackbar ist, da an einem Setzende 5 aus dem Setzgerät 1 austritt und in einen Untergrund eintreibbar ist.

Die verwendeten Befestigungselemente werden vorzugsweise über ein geräteinternes Magazin 6 bereitgestellt, das in der Nähe des Setzendes 5 des Setzgeräts 1 angebracht ist. Aus dem Magazin 6 werden die Befestigungselemente, vorzugsweise einzeln, automatisch entnommen und am Setzende 5 bereitgestellt.

Zum Eintreiben der Befestigungselemente in den Untergrund benötigte Energie wird in einem Brennstoffbehälter 8 im Inneren des Setzgeräts 1 bereitgestellt. Bei dem Brennstoff in dem Brennstoffbehälter 8 handelt es sich um Flüssiggas. Daher wird der Brennstoffbehälter 8 auch als Gasdose oder Gaskartusche bezeichnet.

Der Brennstoffbehälter 8 ist über eine verstellbare beziehungsweise regelbare Dosiereinrichtung 10 und eine Verbindungsleitung 11 mit einer Brennkammer oder einem Brennraum 12 verbindbar. Die Dosiereinrichtung 10 ist vorzugsweise als Dosierventil ausgeführt.

In dem Brennraum beziehungsweise der Brennkammer 12 wird Brennstoff, also Gas, aus dem Brennstoffbehälter 8 mit Luft zu einem brennfähigen Gemisch vermischt, das durch eine Zündeinrichtung 14 gezündet wird, um ein Befestigungselement, wie einen Bolzen oder einen Nagel, in den Untergrund einzutreiben. Die zum Eintreiben benötigte Energie, wird beim Betätigen eines Abzugs oder Triggers 16 des Setzgeräts 1 über einen Kolben (nicht dargestellt) von der Brennkammer 12 auf ein Befestigungselement am Setzende 5 übertragen.

In den Brennraum 12 kann ein FAN oder Ventilator (nicht dargestellt) angeordnet sein, um in dem Brennraum 12 Turbulenz zu erzeugen, den Brennraum 12 zu spülen und/oder zu kühlen. Der FAN oder Ventilator wird zum Beispiel durch einen Elektromotor (ebenfalls nicht dargestellt) angetrieben.

Zu Steuerungszwecken ist in dem Setzgerät 1 eine Steuerung oder Steuerungseinheit 20 angeordnet. Von der Steuerung 20 erstreckt sich ein Zündkabel 19 zu der Zündeinrichtung 14 im Brennraum 12. Über das Zündkabel 19 wird das zündfähige Gemisch im Brennraum 12 mit Hilfe der Zündeinrichtung 14 gezündet.

Gemäß einem Aspekt der Erfindung ist auf dem Brennstoffbehälter 8 das Abfülldatum 24 gespeichert. Das Abfülldatum 24 des Brennstoffbehälters 8 kann mit einer Leseeinheit 25 ausgelesen werden, die in die Steuerung 20 integriert ist.

Darüber hinaus ist eine Echtzeituhr 28 in die Steuerung 20 integriert. Die Echtzeituhr 28 misst ständig, auch bei ausgeschaltetem Setzgerät 1, die Zeit. Über die Echtzeituhr 28 kann die aktuelle Zeit also im Betrieb des Setzgeräts 1 abgerufen werden.

Ein Grundgedanke der Erfindung basiert auf einer Abschätzung eines Druckabfalls in dem Brennstoffbehälter 8. Zur Abschätzung des Druckabfalls wird die Lagerungszeit oder das Alter des Brennstoffbehälters 8 verwendet.

Aus dem Abfülldatum 24 des Brennstoffbehälters 8 und der aktuellen Zeit beziehungsweise dem aktuellen Datum, die beziehungsweise das mit der Echtzeituhr 28 erfasst wird, kann auf einfache Art und Weise ein durchschnittlicher Druckabfall in dem Brennstoffbehälter 8 abgeschätzt werden. Gemäß einem weiteren Aspekt der Erfindung wird der Druck in dem Brennstoffbehälter 8 nicht als konstant angenommen, sondern mit Hilfe des abgeschätzten durchschnittlichen Druckabfalls korrigiert.

Der altersbedingte Druckabfall in dem Brennstoffbehälter 8 führt zu einem geringeren Massenstrom während der Dosierung. Durch die erfindungsgemäße Anpassung der Dosierzeit kann die Dosiermenge trotz eines reduzierten Massenstroms in Folge des Druckabfalls in dem Brennstoffbehälter 8 konstant gehalten werden.

Die Erfindung ermöglicht besonders vorteilhaft die Verwendung von Brennstoffbehältern 8, bei denen alterungsbedingt ein signifikanter Druckabfall im Inneren auftritt. Ein signifikanter Druckabfall kann zum Beispiel bei Brennstoffbehältern auftreten, die im Inneren einen Beutel zur Aufnahme des Gases beziehungsweise des Brennstoffs aufweisen.

Derartige Brennstoffbehälter können in dem erfindungsgemäßen System, insbesondere in dem erfindungsgemäßen Setzgerät 1, ohne Störungen verwendet werden, und insbesondere ohne dass die Qualität der Setzungen beeinträchtigt werden. Zudem kann durch die Erfindung die Dauer der Verwendbarkeit beziehungsweise Haltbarkeit von Brennstoffbehältern, insbesondere von Brennstoffbehältern, deren Druck über das Alter beziehungsweise die Lagerungszeit signifikant abfällt, deutlich erhöht werden, zum Beispiel von einem Jahr auf zwei Jahre.

## Patentansprüche

1. Verfahren zum Steuern von Einspritzvorgängen in flüssigbrennstoffbetriebenen Setzgeräten (1), die einen Brennstoffbehälter (8) umfassen, aus welchem Brennstoff über eine zeitgesteuerte Dosiereinrichtung (10) einer Brennkammer (12) zugeführt wird, **dadurch gekennzeichnet, dass** eine Dosierzeit der zeitgesteuerten Dosiereinrichtung entsprechend des Alters des Brennstoffbehälters (8) angepasst wird.

2. Verfahren nach Anspruch 1, **dadurch gekennzeichnet, dass** ein Abfülldatum (24) oder Herstelldatum an oder auf dem Brennstoffbehälter (8) in vorzugsweise elektronisch und/oder optisch erfassbarer beziehungsweise lesbarer Form gespeichert wird.

3. Verfahren nach Anspruch 2, **dadurch gekennzeichnet, dass** das Abfülldatum (24) oder Herstelldatum des Brennstoffbehälters (8) in dem Setzgerät (1) erfasst beziehungsweise gelesen wird.

4. Verfahren nach Anspruch 2 oder 3, **dadurch gekennzeichnet, dass** vor einem Dosiervorgang beziehungsweise Setzvorgang das Alter des Brennstoffbehälters (8) bestimmt wird.

5. Verfahren nach einem der Ansprüche 2 bis 4, **dadurch gekennzeichnet, dass** das Alter des Brennstoffbehälters (8) aus dem Abfülldatum (24) oder Herstelldatum des Brennstoffbehälters (8) und einer Echtzeit ermittelt wird.

6. Verfahren nach Anspruch 5, **dadurch gekennzeichnet, dass** die Echtzeit mit einer Echtzeituhr (28) in dem Setzgerät (1) erfasst wird.

7. Verfahren nach einem der Ansprüche 2 bis 6, **dadurch gekennzeichnet, dass** das Abfülldatum (24) oder Herstelldatum des Brennstoffbehälters (8) mit einer Leseeinheit (25) in dem Setzgerät (1) gelesen wird.

8. Verfahren nach einem der vorhergehenden Ansprüche, **dadurch gekennzeichnet, dass** mit dem Alter des Brennstoffbehälters (8) ein durchschnittlicher Druckabfall in dem Brennstoffbehälter (8) abgeschätzt wird.

9. System zum Steuern von Einspritzvorgängen in flüssigbrennstoffbetriebenen Setzgeräten (1), die einen Brennstoffbehälter (8) umfassen, aus welchem Brennstoff über eine zeitgesteuerte Dosiereinrichtung (10) einer Brennkammer (12) zugeführt wird, gemäß einem Verfahren nach einem der vorhergehenden Ansprüche, **gekennzeichnet durch** der folgenden Merkmale:
- an oder auf dem Brennstoffbehälter (8) ist das Abfülldatum (24) oder Herstelldatum des Brennstoffbehälters (8) angegeben;
- das Setzgerät (1) umfasst eine Echtzeituhr;
- das Setzgerät (1) umfasst eine Leseeinheit (25);
- das Setzgerät (1) umfasst eine Steuerung (20), die steuerungsmäßig mit der Echtzeituhr (28) und der Leseeinheit (25) verbunden ist;
- das Setzgerät umfasst ein Computerprogrammprodukt mit einem Programmcode zum Durchführen eines Verfahrens nach einem der vorhergehenden Ansprüche, insbesondere, wenn das Programm in der Steuerung des Setzgeräts (1) ausgeführt wird.

10. Computerprogrammprodukt mit einem Programmcode zum Durchführen eines Verfahrens nach einem der Ansprüche 1 bis 8, insbesondere, wenn das Programm in der Steuerung des Setzgeräts ausgeführt wird.

11. Setzgerät (1) für ein System nach Anspruch 9.

## Claims

1. Method for controlling injection processes in liquid fuel-operated setting tools (1), which comprise a fuel tank (8) from which fuel is supplied to a combustion chamber (12) by means of a time-controlled metering device (10), **characterized in that** a metering time of the time-controlled metering device is adapted to the age of the fuel tank (8).

2. Method according to Claim 1, **characterized in that** a filling date (24) or a production date is stored at or on the fuel tank (8) in a preferably electronically and/or optically detectable or readable form.

3. Method according to Claim 2, **characterized in that** the filling date (24) or the production date of the fuel container (8) is detected or read in the setting tool (1).

4. Method according to Claim 2 or 3, **characterized in that** the age of the fuel tank (8) is determined before a metering operation or a setting operation.

5. Method according to one of Claims 2 to 4, **characterized in that** the age of the fuel tank (8) is determined from the filling date (24) or the production date of the fuel tank (8) and a real time.

6. Method according to Claim 5, **characterized in that** the real time is detected by a real time clock (28) in the setting tool (1).

7. Method according to one of Claims 2 to 6, **characterized in that** the filling date (24) or the production date of the fuel tank (8) is read by a reading unit (25) in the setting tool (1).

8. Method according to one of the preceding claims, **characterized in that** the age of the fuel tank (8) is used to calculate an average drop in pressure in the fuel tank (8).

9. System for controlling injection processes in liquid fuel-operated setting tools (1), which comprise a fuel tank (8) from which fuel is supplied to a combustion chamber (12) by means of a time-controlled metering device (10), by a method according to one of the preceding claims, **characterized by** the following features:
- the filling date (24) or the production date of the fuel container (8) is indicated at or on the fuel container (8);
- the setting tool (1) comprises a real time clock;
- the setting tool (1) comprises a reading unit (25);
- the setting tool (1) comprises a controller (20), which is connected to the real time clock (28) and the reading unit (25) for control purposes;
- the setting tool comprises a computer program product with a program code for carrying out a method according to one of the preceding claims, in particular when the program is performed in the controller of the setting tool (1).

10. Computer program product with a program code for carrying out a method according to one of Claims 1 to 8, in particular when the program is performed in the controller of the setting tool.

11. Setting tool (1) for a system according to Claim 9.

## Revendications

1. Procédé de commande de processus d'injection dans des appareils de réglage à carburant liquide (1) qui comprennent un réservoir de carburant (8) à partir duquel du carburant est acheminé vers une chambre de combustion (12) par le biais d'un dispositif de dosage à commande temporelle (10), **caractérisé en ce qu'**un temps de dosage est adapté au dispositif de dosage à commande temporelle en fonction de la vétusté du réservoir de carburant (8).

2. Procédé selon la revendication 1, **caractérisé en ce qu'**une date de remplissage (24) ou une date de production placée contre ou sur le réservoir de carburant (8) est mémorisée sous une forme détectable ou lisible de préférence par des moyens électroniques et/ou optiques.

3. Procédé selon la revendication 2, **caractérisé en ce que** la date de remplissage (24) ou la date de production du réservoir de carburant (8) est détectée ou lue dans l'appareil de réglage (1).

4. Procédé selon la revendication 2 ou 3, **caractérisé en ce que** la vétusté du réservoir de carburant (8) est déterminée avant un processus de dosage ou un processus de réglage.

5. Procédé selon l'une des revendications 2 à 4, **caractérisé en ce que** la vétusté du réservoir de carburant (8) est déterminée à partir de la date de remplissage (24) ou de la date de production du réservoir de carburant (8) et d'un temps réel.

6. Procédé selon la revendication 5, **caractérisé en ce que** le temps réel est détecté au moyen d'une horloge à temps réel (28) dans l'appareil de réglage (1).

7. Procédé selon l'une des revendications 2 à 6, **caractérisé en ce que** la date de remplissage (24) ou la date de production du réservoir de carburant (8) est lue avec une unité de lecture (25) située dans l'appareil de réglage (1).

8. Procédé selon l'une des revendications précédentes, **caractérisé en ce qu'**une chute de pression moyenne dans le réservoir de carburant (8) est estimée avec la vétusté du réservoir de carburant (8).

9. Système de commande de processus d'injection dans des appareils de réglage à carburant liquide (1) qui comprennent un réservoir de carburant (8) à partir duquel du carburant est acheminé vers une chambre de combustion (12) par le biais d'un dispositif de dosage à commande temporelle (10), conformément à un procédé selon l'une des revendications précédentes, **caractérisé par** les caractéristiques suivantes :
- la date de remplissage (24) ou la date de production du réservoir de carburant (8) est indiquée sur le réservoir de carburant (8) ;
- l'appareil de réglage (1) comprend une horloge à temps réel ;
- l'appareil de réglage (1) comprend une unité de lecture (25) ;
- l'appareil de réglage (1) comprend une commande (20) qui est reliée à l'horloge à temps réel (28) et à l'unité de lecture (25) à des fins de commande ;
- l'appareil de réglage comprend un progiciel comprenant un code de programme destiné à mettre en oeuvre un procédé selon l'une des revendications précédentes, en particulier lorsque le programme est exécuté dans la commande de l'appareil de réglage (1).

10. Progiciel comprenant un code de programme destiné à mettre en oeuvre un procédé selon l'une des revendications 1 à 8, notamment lorsque le programme est exécuté dans la commande de l'appareil de réglage.

11. Appareil de réglage (1) destiné à un système selon la revendication 9.
